# EUROPÄISCHE PATENTSCHRIFT

(11) **EP 0 936 157 B1**
(45) Veröffentlichungstag und Bekanntmachung des Hinweises auf die Patenterteilung: **08.05.2002**
(21) Anmeldenummer: 98122369.6
(22) Anmeldetag: 25.11.1998
(51) Int. Cl.: B65D 63/10, F16L 3/233

(54) **Kunststoffhalteband**
Plastic bundle tie
Collier de serrage en matière plastique

(30) Priorität: 04.02.1998 DE 19804357
(43) Veröffentlichungstag der Anmeldung: 18.08.1999
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Eder, Thomas, Dr.-Ing.

(56) Entgegenhaltungen:
- EP-A- 0 583 554
- DE-A- 2 420 289
- DE-U- 29 515 493
- US-A- 5 135 188
- US-A- 5 803 413

## Beschreibung

Die Erfindung bezieht sich auf ein Kunststoffhalteband zum Umschlingen, Haltern und Bündeln von Gegenständen, insbesondere von Rohren oder Kabeln, nach dem Oberbegriff des Anspruchs 1.

Als Stand der Technik sind bereits Haltebänder bekannt (DE-GM 297 07 757.0, DE-OF 38 07 173, US-PS 3,991,444), bei welchen jeweils das Bandteil in das Kopfteil eingeführt wird, wobei vor oder nach diesem Montagevorgang das Halterteil mit einem Träger verbunden werden kann.

Eine weitere Gestaltung eines Haltebandes sieht vor, dass an das Kopfteil unmittelbar das mit einem Träger verbindbare Halteteil anschließt.

Allen vorgenannten Konstruktionen ist gemeinsam, dass Rohre bzw. Kabel nach Umschlingen und Fixieren des Bandteils im Kopfteil gesichert werden und das Halteband damit seine Funktion erfüllt hat.

Als Stand der Technik, von. dem die vorliegende Erfindung ausgeht, ist ein Kunststoffhalteband bekannt, welches analog dem Gegenstand der vorliegenden Anmeldung ebenfalls ein Halteteil aufweist, welches mit einem nicht näher dargestellten Träger verbindbar ist (US-A 5803413).

Weiterer Stand der Technik ist ein flexibles Halteband für Kabel oder Rohre, an welches zusätzliche Befestigungs- oder Haltemittel angebracht werden können (DE-A 2420289). Diese Befestigungs- oder Haltemittel können beispielsweise Steckzapfen, Ansätze oder Spreizclips sein. Eine positionsgerechte Fixierung eines zusätzlichen Rohres oder Kabels ist bei dieser bekannten Konstruktion nicht möglich.

Demgegenüber besteht die Aufgabe der vorliegenden Erfindung darin, ein Kunststoffhalteband gemäß dem Oberbegriff des Anspruchs 1 so zu gestalten, dass der Anwendungsbereich auf einfache Weise erweitert wird, und zwar so, dass die zu halternden Teile, wie beispielsweise Rohre, Kabel oder andere Gegenstände, in ihrer fixierten Position unverändert gehalten werden können.

Diese Aufgabe wird erfindungsgemäß gelöst mit den Merkmalen im kennzeichnenden Teil des Anspruchs 1. Durch die vorliegende Erfindung wird damit eine Konstruktion geschaffen, durch welche auf einfache Weise in genau fixierter Lage weitere Rohre, Kabel oder andere Elemente gehalten werden können.

In weiterer Ausgestaltung der Erfindung kann bei einem Band, dessen Halteteil kegelstumpfförmig ausgebildet ist, und an dem eine Längsrippe vorhanden sowie eine innere Öffnung vorgesehen ist, eine Ausnehmung Teil der inneren Öffnung sein, wobei die Stege im jeweiligen Endbereich einer Schale des Zusatzelementes angeordnet sind, welche zentrisch eine Aussparung zur Einlagerung der Längsrippe besitzen.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine Seitenansicht eines Kunststoffhaltebandes mit gebrochenem Bandteil, anschließendem Kopfteil und Halteteil;
- Fig. 2: eine Seitenansicht des erfindungsgemäßen Zusatzelements;
- Fig. 3: eine Draufsicht auf das Kunststoffhalteband nach Fig. 1;
- Fig. 4: eine Draufsicht auf das Zusatzelement nach Fig. 2;
- Fig. 5: das Halteteil und das Zusatzelement in montiertem Zustand in Seitenansicht;
- Fig. 6: das Halteteil und das Zusatzelement in montiertem Zustand in Draufsicht;
- Fig. 7: eine Seitenansicht des Halteteils und des Zusatzelements vor der Montage;
- Fig. 8: eine andere Ausführungsmöglichkeit der Gestaltung des Zusatzelements mit mehreren hintereinander liegenden Lagerschalen.

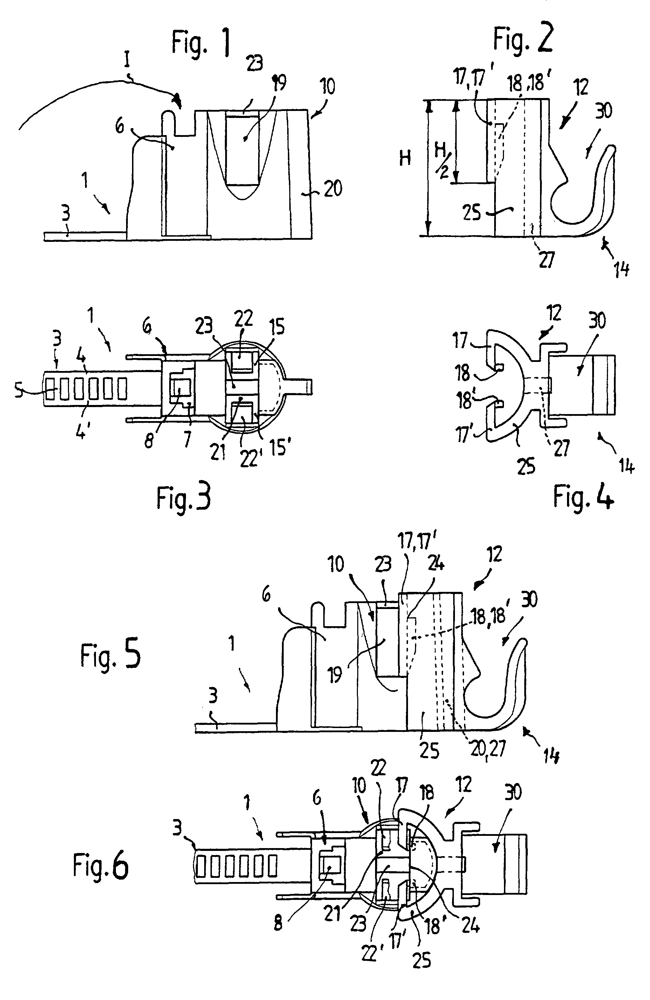

In Fig. 1 und 3 ist ein Kunststoffhalteband 1 in Seitenansicht bzw. in Draufsicht dargestellt, welches zum Umschlingen, Haltern und Bündeln von nicht näher dargestellten Gegenständen, insbesondere von Rohren und Kabeln dient. Dieses Halteband 1 weist ein profiliertes Bandteil 3 mit zwei parallelen Längsstegen 4 und 4' und quer dazu angeordneten Sprossen 5 auf. An das Bandteil 3 schließt ein Kopfteil 6 an, das innerhalb einer Durchgangsöffnung 7 mindestens ein federndes Verriegelungselement 8 aufweist, in welches mindestens ein Teilbereich einer Sprosse 5 einlagerbar ist.

Zum Umschlingen, Haltern und Bündeln von Gegenständen mit Hilfe des Haltebandes 1 besteht die Möglichkeit, dass das Bandteil 3 um die Gegenstände geschlungen und in Pfeilrichtung I in die Durchgangsöffnung 7 des Kopfteils 6 eingeschoben und dort fixiert wird.

Aus Fig. 1 und 3 geht hervor, dass sich neben dem Kopfteil 6 ein Halteteil 10 befindet, welches mit einem nicht näher dargestellten Träger verbindbar ist. Bei dem in den Figuren dargestellten Ausführungsbeispiel ist das Halteteil 10 kegelstumpfförmig gestaltet und weist an dem dem Bandteil 3 gegenüberliegenden Außenumfang eine Längsrippe 20 auf.

Weiterhin ist eine innere Öffnung 21 nach Fig. 3 vorgesehen, welche im oberen Bereich durch einen Steg 23 begrenzt ist. In der inneren Öffnung 21 befinden sich beispielsweise zwei einander gegenüberliegende federnde Zungen 22 und 22', welche sich z.B. in das Profil eines nicht näher dargestellten Grobgewindebolzens einlagern können, der mit einem nicht näher dargestellten Träger verbunden ist.

Die innere Öffnung 21 ist im oberen Bereich mit einer sich quer durch das Halteteil 10 erstreckenden Öffnung 19 verbunden.

Erfindungsgemäß besteht nun die Möglichkeit, das Halteteil 10 des Kunststoffhaltebandes 1 mit einem in Fig. 2 und 4 dargestellten Zusatzelement 12 zu verbinden, welches mit mindestens einem Lager- und/oder Aufnahmebereich 14 versehen ist. Hierbei kann dieses Zusatzelement 12 in mindestens einen Bereich des Haltebereichs 10 eingeclippt werden. Zur Befestigung des Zusatzelements 12 am Halteteil 10 kann dieses Halteteil mindestens eine Ausnehmung 15 bzw. 15' nach Fig. 3 aufweisen, in welche ein Steg 17 bzw. 17' des Zusatzelements 12 nach Fig. 4 einlagerbar ist. Vorzugsweise finden zwei einander gegenüberliegende Ausnehmungen 15 und 15' des Halteteils 10 und zwei ebenso gestaltete Stege 17 und 17' des Zusatzelements 12 Anwendung (Fig. 3 bzw. 4).

Aus Fig. 3 geht darüber hinaus hervor, dass die Ausnehmungen 15 und 15' Teil der inneren Öffnung 21 sind. Gemäß Fig. 4 und 6 sind die Stege 17 und 17' im jeweiligen Endbereich einer Schale 25 des Zusatzelements 12 angeordnet. Diese Schale 25 besitzt nach Fig. 4 und 6 zentrisch eine Aussparung 27 zur Einlagerung der in Fig. 1 und 3 näher dargestellten Längsrippe 20 des Halteteils 10.

Aus Fig. 4 geht darüber hinaus hervor, dass die Stege 17 und 17' jeweils im Abschlussbereich eine Längsrippe 18 und 18' aufweisen. Diese Längsrippen hintergreifen in montiertem Zustand nach Fig. 5 und 6 eine obere Kante 24 der inneren Öffnung 21 des Halteteils 10.

Nach Fig. 2 hat das Zusatzelement 12 etwa die gleiche Höhe H wie das Halteteil 10, wobei die inneren Stege 17, 17' sich etwa über die halbe Höhe H/2 des Zusatzelements 12 erstrecken und die Längsrippen 18 und 18' entsprechend kürzer ausgebildet sind.

Die Stege 17 und 17' und die Längsrippen 18 und 18' befinden sich vorzugsweise im oberen Bereich des Zusatzelements 12.

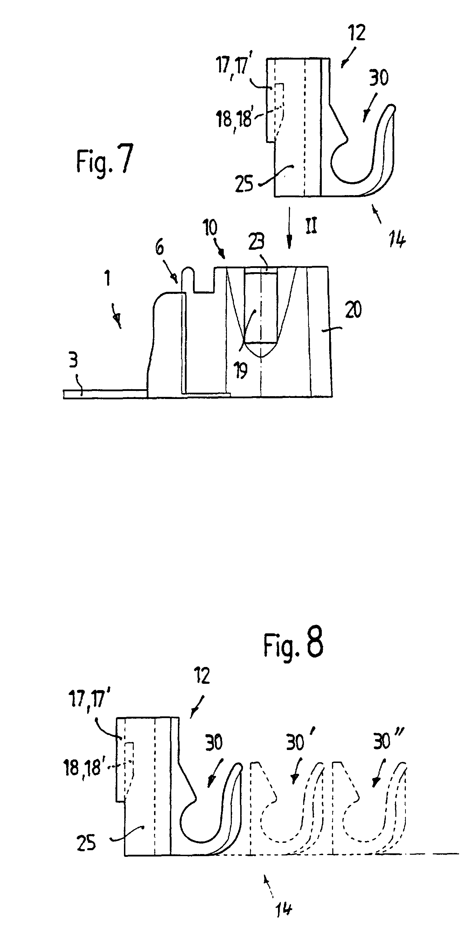

Aus Fig. 7 geht hervor, dass das Zusatzelement 12 von oben in Pfeilrichtung auf das Halteteil 10 aufgeschoben wird, wobei die Stege 17 und 17' zunächst eine Führung darstellen, und zwar so lange, bis die Längsrippen 18 und 18' die obere Kante 24 des Halteteils 10 hintergreifen. Die Wölbung der Schale 25 ist hierbei vorteilhafterweise dem Außenumfang des Halteteils 10 angepasst, so dass nach Fig. 6 in montiertem Zustand das Zusatzelement 12 mit dem Halteteil 10 eine einstückige Einheit bildet und nun mit dem Lager- und/oder Aufnahmebereich 14 eine weitere Aufnahmemöglichkeit von Rohren bzw. Kabeln bereitstellt.

Bei dem Ausführungsbeispiel nach Fig. 2 bis 7 ist hierbei als Lager- und/oder Aufnahmebereich 14 eine einzige Lagerschale 30 des Zusatzelements 12 vorgesehen. Nach Fig. 8 besteht auch die Möglichkeit, mehrere hintereinander liegende Lagerschalen 30, 30' bzw. 30" zur Halterung von Rohren oder Kabeln vorzusehen. Statt dieser Lagerschalen besteht auch die nicht näher dargestellte Möglichkeit, das Zusatzelement 12 mit weiteren Aufnahmemöglichkeiten, beispielsweise in Form von Zapfen oder Haltebereichen auszustatten, damit über das Zusatzelement 12 weitere Teile an dem Kunststoffhalteband befestigt werden können.

Insgesamt ergibt sich der Vorteil, dass der Anwendungsbereich des erfindungsgemäßen Kunststoffhaltebandes durch Verbindung mit einem Zusatzelement 12 erheblich erweitert wird.

## Patentansprüche

1. Kunststoffhalteband (1) zum Umschlingen, Haltern und Bündeln von Gegenständen, insbesondere von Rohren oder Kabeln,
mit einem profilierten Bandteil (3) mit zwei parallelen Längsstegen (4, 4') und quer dazu angeordneten Sprossen (5),
mit einem an das Bandteil (3) anschließenden Kopfteil (6), welches innerhalb einer Durchgangsöffnung (7) mindestens ein federndes Verriegelungselement (8) aufweist, in welches mindestens ein Teilbereich einer Sprosse einlagerbar ist und
mit einem mit einem Träger verbindbaren Halteteil (10),
**dadurch gekennzeichnet,**
**dass** an dem Halteteil (10) ein Zusatzelement (12) mit mindestens einem Lager- und/oder Aufnahmebereich (14) befestigbar ist und
**dass** das Halteteil(10) zwei Ausnehmungen (15, 15') aufweist, in welche Stege (17, 17') des Zusatzelements (12) einlagerbar sind.

2. Band nach Anspruch 1, dessen Halteteil (10) kegelstumpfförmig ausgebildet ist, an dem dem Bandteil (3) gegenüberliegenden Außenumfang eine Längsrippe (20) aufweist und mit einer inneren Öffnung (21) versehen ist,
**dadurch gekennzeichnet,**
**dass** die Ausnehmung (15, 15') Teil der inneren Öffnung (21) ist, wobei die Stege (17, 17') im jeweiligen Endbereich einer Schale (25) des Zusatzelements (12) angeordnet sind, welche zentrisch eine Aussparung (27) zur Einlagerung der Längsrippe (21) besitzt.

3. Band nach Anspruch 2,
**dadurch gekennzeichnet,**
**dass** die Stege (17, 17') jeweils im Abschlussbereich eine Längsrippe (18, 18') aufweisen, welche in montiertem Zustand eine obere Kante (24) der inneren Öffnung (21) hintergreifen.

4. Band nach Anspruch 2 und 3,
**dadurch gekennzeichnet,**
**dass** endseitig der Schale (25) der Lager- und/oder Aufnahmebereich (14) des Zusatzelements (12) angeordnet ist.

5. Band nach Anspruch 4,
**dadurch gekennzeichnet,**
**dass** der Lager- und/oder Aufnahmebereich (14) des Zusatzelements (12) aus einer Lagerschale (30) oder mehreren, hintereinander liegenden Lagerschalen (30', 30") zur Halterung von Kabeln oder Rohren besteht.

6. Band nach einem oder mehreren der vorhergehenden Ansprüche,
**dadurch gekennzeichnet,**
**dass** das Zusatzelement (12) etwa die gleiche Höhe (H) wie das Halteteil (10) aufweist, wobei die inneren Stege (17, 17') jeweils in dem oberen Teil der Ausnehmung (15, 15') eingeclippt sind.

7. Band nach Anspruch 6,
**dadurch gekennzeichnet,**
**dass** sich die beiden Stege (17, 17') etwa über die halbe Höhe (H/2) des Zusatzelements (12) erstrecken.

## Claims

1. Plastic retaining strap (1) for wrapping around, securing and bundling objects, in particular pipes or cables,
having a profiled strap part (3) with two parallel longitudinal webs (4, 4') and crosspieces (5) arranged transversely thereto,
having a head part (6) which adjoins the strap part (3) and, within a passage opening (7), has at least one resilient locking element (8) into which at least one subregion of a crosspiece can be inserted, and
having a retaining part (10) which can be connected to a support,
**characterized**
**in that** an additional element (12) having at least one bearing and/or accommodating region (14) can be fastened to the retaining part (10), and
**in that** the retaining part (10) has two recesses (15, 15') into which webs (17, 17') of the additional element (12) can be inserted.

2. Strap according to Claim 1, the retaining part (10) of which is designed in the shape of a truncated cone, has a longitudinal rib (20) on the outer circumference lying opposite the strap part (3) and is provided with an inner opening (21),
**characterized**
**in that** the recess (15, 15') is part of the inner opening (21), the webs (17, 17') being arranged in the respective end region of a shell (25) of the additional element (12), which shell has a cutout (27) in its centre for the insertion of the longitudinal rib (21).

3. Strap according to Claim 2,
**characterized**
**in that** the webs (17, 17') each have in the closing region a longitudinal rib (18, 18') which, when fitted, grips behind an upper edge (24) of the inner opening (21).

4. Strap according to Claims 2 and 3,
**characterized**
**in that** the bearing and/or accommodating region (14) of the additional element (12) is arranged on the end side of the shell (25).

5. Strap according to Claim 4, **characterized**
**in that** the bearing and/or accommodating region (14) of the additional element (12) comprises a bearing shell (30) or a plurality of bearing shells (30', 30'') lying one behind another, for the securing of cables or pipes.

6. Strap according to one or more of the preceding claims,
**characterized**
**in that** the additional element (12) has approximately the same height (H) as the retaining part (10), the inner webs (17, 17') each being clipped into the upper part of the recess (15, 15').

7. Strap according to Claim 6,
**characterized**
**in that** the two webs (17, 17') extend approximately over half the height (H/2) of the additional element (12).

## Revendications

1. Bande de fixation en matière synthétique (1) pour envelopper, fixer et empaqueter des objets, en particulier des tubes ou des câbles,
avec une partie de bande (3) profilée avec deux barrettes longitudinales parallèles (4, 4') et des échelons (5) disposés obliquement par rapport à elles,
avec une partie frontale (6) liée à la partie de bande (3) qui présente au moins un élément de verrouillage (8) élastique situé à l'intérieur d'une ouverture de passage (7) et dans lequel on peut loger au moins une partie d'un échelon et avec une partie de fixation (10) qu'on peut relier à un support,
**caractérisée en ce que**
l'on peut fixer sur la partie de fixation (10) un élément supplémentaire (12) avec au moins une zone de logement et/ou de réception (14) et que
la partie de fixation (10) présente deux creux (15, 15') dans lesquels on peut loger des barrettes (17, 17') de l'élément supplémentaire (12).

2. Bande selon la revendication 1 dont la partie de fixation (10) a une forme de cône tronqué, présente une nervure longitudinale (20) placée sur la zone externe située en face de la partie de bande (3) et est munie d'une ouverture (21) interne
**caractérisée en ce que**
le creux (15, 15') est une partie de l'ouverture interne (21), les barrettes (17, 17') étant placées dans l'extrémité correspondante d'une surface convexe (25) de l'élément supplémentaire (12) qui comporte en son centre un évidement (27) destiné à engager la nervure longitudinale (20).

3. Bande selon la revendication 2
**caractérisée en ce que**
les barrettes (17, 17') présentent chacune dans la zone extrême une nervure longitudinale (18, 18') qui, une fois l'assemblage réalisé, rejoint une arête (24) supérieure de l'ouverture interne (21).

4. Bande selon la revendication 2 ou 3
**caractérisée en ce que**
la zone de logement et/ou de réception (14) de l'élément supplémentaire (12) est placée à l'extrémité de la surface convexe (25).

5. Bande selon la revendication 4
**caractérisée en ce que**
la zone de logement et/ou de réception (14) de l'élément supplémentaire (12) est composée d'une surface convexe de logement (30) ou de plusieurs surfaces convexes de logement (30', 30") placées les unes derrière les autres destinées à la fixation de câbles ou de tubes.

6. Bande selon l'une ou plusieurs des revendications précédentes
**caractérisée en ce que**
l'élément supplémentaire (12) présente à peu près la même hauteur (H) que la partie de fixation (10), chacune des barrettes (17, 17') internes étant bloquée dans la partie supérieure du creux (15, 15').

7. Bande selon la revendication 6
**caractérisée en ce que**
les deux barrettes (17, 17') s'étendent à peu près sur la moitié de la hauteur (H/2) de l'élément supplémentaire (12).
